# EUROPEAN PATENT APPLICATION

(11) **EP 4 636 406 A1**
(43) Date of publication of application: **22.10.2025**
(21) Application number: 23903060.4
(22) Date of filing: 19.09.2023
(51) Int. Cl.: G01N 35/02

(54) **AUTOMATIC ANALYSIS DEVICE**

(30) Priority: 15.12.2022 JP 2022200490
(71) Applicant: HITACHI HIGH-TECH CORPORATION, Tokyo 105-6409 (JP)
(72) Inventor: ISHIHARA Kohei, Tokyo 105-6409 (JP); TAKAYAMA Hiroyuki, Tokyo 105-6409 (JP); WADA Kentaro, Tokyo 105-6409 (JP); NONAKA Kohei, Tokyo 105-6409 (JP)
(74) Representative: MERH-IP Matias Erny Reichl Hoffmann Patentanwälte PartG mbB
(86) International application number: PCT/JP2023/033986
(87) International publication number: WO 2024/127759

(57) **Abstract**

To provide an automatic analyzer capable of preventing uplift at the time of attachment of a water supply tank with a simple structure that facilitates attachment and detachment of the water supply tank to and from the automatic analyzer. The automatic analyzer includes: an analysis unit 101; a water supply tank 53 including, on a bottom surface 210 thereof, a water-passing pipe 201 that supplies water to the analysis unit 101; an installation surface 207 on which the water supply tank 53 is installed; a magnet 205 provided on either one of the bottom surface 210 and the installation surface 207; and a metal plate 206 provided on the other of the bottom surface 210 and the installation surface 207, and the water supply tank 53 is fixed to the installation surface 207 by a magnetic force of the magnet 205 and the metal plate 206.

## Description

### Technical Field

The present invention relates to an automatic analyzer.

### Background Art

As an example of a liquid container that can be accessed by a pipette and can be easily replenished, PTL 1 discloses that a liquid container includes a main tank, a replenishment tank, and a connecting portion that connects the main tank and the replenishment tank, the main tank includes a storage tank that stores a liquid, the storage tank is accessed by the pipette from above, the replenishment tank includes a bottle that stores the liquid and a cap portion that covers an opening of the bottle, the cap portion is provided with an outlet for taking out the liquid to the outside and a valve mechanism that opens and closes the outlet, and when the replenishment tank is attached to the connecting portion, the valve mechanism opens the outlet, and the storage tank is replenished with the liquid in the bottle.

### Citation List

### Patent Literature

PTL 1: JP2007-263896A

### Summary of Invention

### Technical Problem

An automatic analyzer, for example, a biochemical automatic analyzer, analyzes components of a biological specimen such as serum or urine. In such a biochemical automatic analyzer, generally, a specimen and a reagent are dispensed into a reaction container using a dispensing probe and react with each other, and a change in color tone or turbidity generated in a reaction solution is optically measured by a photometry unit such as a spectrophotometer.

Therefore, contamination or the like of the probe affects dispensing accuracy, and as a result, also affects reliability of the automatic analyzer. Therefore, after the specimen or the like is dispensed, the specimen or the like adhering to an outer surface or an inner surface of the probe is removed by cleaning with a cleaning liquid in a cleaning tank to prevent carryover.

In the biochemical automatic analyzer, water is used for dispensing a sample or the specimen or cleaning the probe. The water is produced by a manufacturing apparatus separated from a main body, and a water storage tank (water supply tank) having a size sufficient to stabilize a water flow is provided such that, even when air bubbles are contained in the supplied water, the water does not enter an inside of the apparatus.

PTL 1 discloses a technique in which a replenishment liquid tank includes the cap portion that rolls on the storage tank, and the cap portion includes the outlet for taking out the liquid to the outside and the valve mechanism for opening and closing the outlet. The connecting portion has a structure in which the connection is realized without a gap by a screw structure, and the valve mechanism is opened at the same time as the connection, and the liquid in the tank is replenished to the storage tank.

The water supply tank in the automatic analyzer in the related art is provided outside the analyzer. Accordingly, a footprint including the automatic analyzer tends to be large. In addition, it is difficult to access the automatic analyzer from behind during maintenance.

In order to solve these problems, the footprint around the analyzer can be improved by changing a shape of the water supply tank in accordance with a capacity reduction such that the water supply tank can be mounted in the analyzer.

Here, since the water supply tank is attachable and detachable for maintenance, a pipe for water flow is often provided with a valve mechanism using a spring for preventing a water leakage from the tank. In addition, a nipple for connecting to a pipe of the water supply tank is often provided at a water supply tank attachment position of the analyzer. The nipple has a push lot for opening the valve of the water supply tank and a rubber O-ring.

However, it has been found that a spring reaction force of the valve mechanism and a resistance generated by the O-ring are combined to uplift the entire tank, and there is a concern about a risk of the water leakage and an influence of air mixing into a flow path on analysis performance.

In particular, when the uplift of the water supply tank occurs, erroneous detection may occur in an in-tank water level sensor or a tank presence sensor provided around the water supply tank, and there is also a concern about a risk of stopping of the operation of the analyzer itself.

A method of forming a screw structure in a pipe as described in PTL 1 is a countermeasure against the uplift, but it takes time and effort to rotate and remove the screw structure each time the screw structure is attached or detached, which is a burden on an operator, and thus a different mechanism is required.

In order to solve the above problems, an object of the invention is to provide an automatic analyzer capable of preventing uplift when a water supply tank is attached with a simple structure in which the water supply tank is easily attached to and detached from the analyzer.

### Solution to Problem

The invention includes a plurality of units for solving the above-described problems, and an example of the invention includes an analysis unit, a water supply tank including, on a bottom surface thereof, a pipe configured to supply water to the analysis unit, an installation surface on which the water supply tank is installed, a magnet provided on either one of the bottom surface and the installation surface, and a magnetic member provided on the other of the bottom surface and the installation surface. The water supply tank is fixed to the installation surface by a magnetic force of the magnet and the magnetic member.

### Advantageous Effects of Invention

According to the invention, it is possible to prevent the uplift when attaching the water supply tank with a simple structure in which the water supply tank is easily attached to and detached from the analyzer. Problems, configurations, and effects other than those described above will be clarified by the following description of embodiments.

### Brief Description of Drawings

[FIG. 1] FIG. 1 is an overall configuration diagram of an automatic analysis system according to Embodiment 1.
[FIG. 2] FIG. 2 is a cross-sectional view of a connection portion between a water supply tank and a water supply unit in an automatic analyzer according to Embodiment 1.
[FIG. 3A] FIG. 3A is a schematic diagram of a water supply tank valve mechanism in the automatic analyzer according to Embodiment 1.
[FIG. 3B] FIG. 3B is a schematic diagram of the water supply tank valve mechanism in the automatic analyzer according to Embodiment 1.
[FIG. 4] FIG. 4 is a view of the water supply tank in the automatic analyzer according to Embodiment 1 as viewed from above.
[FIG. 5A] FIG. 5A is a perspective view of the water supply unit in a state where the water supply tank is installed in the automatic analyzer according to Embodiment 1.
[FIG. 5B] FIG. 5B is a perspective view of the water supply unit in the state where the water supply tank is installed in the automatic analyzer according to Embodiment 1.
[FIG. 6] FIG. 6 is a cross-sectional view of the water supply tank in the automatic analyzer according to Embodiment 1.
[FIG. 7] FIG. 7 is a cross-sectional view showing a positional relationship between a magnet and a handle in the automatic analyzer according to Embodiment 1.
[FIG. 8] FIG. 8 is a perspective view of a bottom surface portion of a water supply tank in an automatic analyzer according to Embodiment 2.
[FIG. 9] FIG. 9 is a cross-sectional view of a connection portion between a water supply tank and a water supply unit in an automatic analyzer according to Embodiment 3.

### Description of Embodiments

Hereinafter, embodiments of an automatic analyzer of the invention will be described with reference to the drawings. In the drawings used in the present description, the same or corresponding components are denoted by the same or similar reference signs, and a repeated description of these components may be omitted.

### <Embodiment 1>

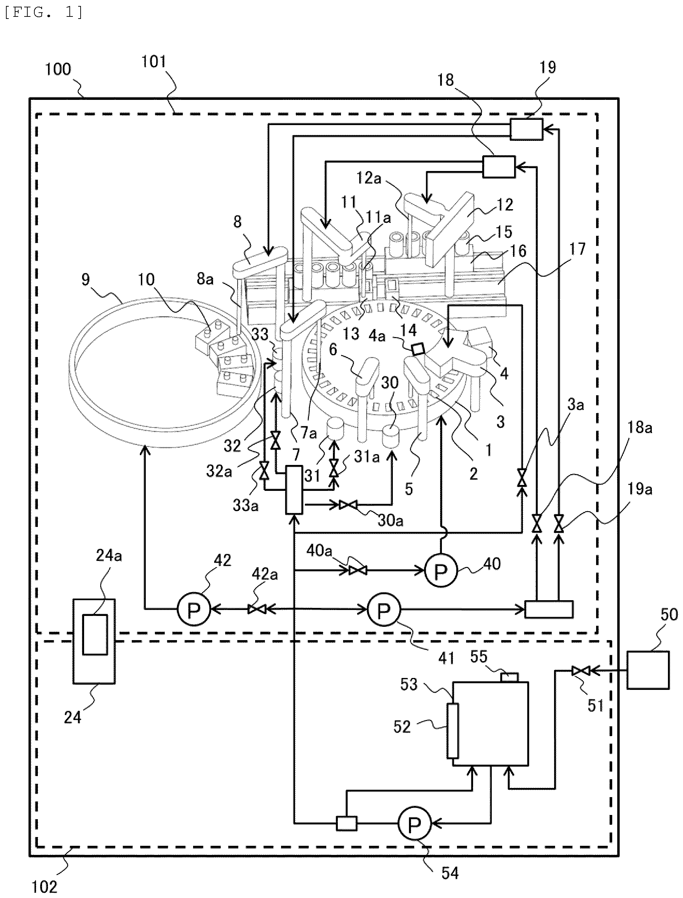

Embodiment 1 of an automatic analyzer according to the invention will be described with reference to FIGS. 1 to 7.

First, an overall configuration of the automatic analyzer will be described with reference to FIG. 1. FIG. 1 is a diagram schematically showing an overall configuration of an automatic analyzer 100.

The automatic analyzer 100 shown in FIG. 1 is mainly divided into three regions including an analysis unit 101 that is a configuration for mixing and reacting a specimen such as blood and a reagent and measuring an absorbance of a reaction solution, a part of a water supply unit 102 that is a mechanism for supplying water to each mechanism of the analysis unit 101, a controller 24.

The analysis unit 101 includes various mechanisms that each of which dispenses a specimen and a reagent into a corresponding one of a plurality of reaction containers 2 to cause a reaction and measure the reacted liquid, and includes a reaction disk 1, a reagent disk 9, a specimen transport mechanism 17, reagent dispensing mechanisms 7, 8, a reagent syringe 19, specimen dispensing mechanisms 11, 12, a specimen syringe 18, a cleaning mechanism 3, a light source 4a, a spectrophotometer 4, stirring mechanisms 5, 6, cleaning tanks 13, 14, 30, 31, 32, 33, and the like.

In the reaction disk 1, the plurality of reaction containers 2 each for mixing and reacting the specimen and the reagent are arranged on a circumference. The specimen transport mechanism 17 that moves a specimen rack 16 on which specimen containers 15 containing the specimen such as the blood are placed is installed near the reaction disk 1.

The specimen dispensing mechanisms 11, 12 capable of rotating and moving up and down are installed between the reaction disk 1 and the specimen transport mechanism 17, and includes specimen probes 11a, 12a respectively. The specimen syringe 18 is connected to the specimen probes 11a, 12a. Each of the specimen probes 11a, 12a moves while drawing an arc around a rotation axis, and dispenses, into the reaction container 2, the specimen from the specimen container 15 transported to a specimen dispensing position by the specimen transport mechanism 17.

A cleaning tank 13 for cleaning the specimen probe 11a with cleaning water and a cleaning container (not shown) for cleaning the specimen probe 11a with special cleaning water are disposed in an operation range of the specimen dispensing mechanism 11. Similarly, a cleaning tank 14 for cleaning the specimen probe 12a with cleaning water and a cleaning container (not shown) for cleaning the specimen probe 12a with special cleaning water are disposed in an operation range of the specimen dispensing mechanism 12.

The reagent disk 9 has a structure in which a plurality of reagent bottles 10 can be placed on a circumference thereof. The reagent disk 9 is kept cold, and is covered with a cover provided with an aspiration port (not shown). Each of the reagent bottles 10 is a bottle storing a reagent used for analyzing the specimen.

The reagent dispensing mechanisms 7, 8 capable of rotating and moving up and down are installed between the reaction disk 1 and the reagent disk 9, and include reagent probes 7a, 8a, respectively. The reagent syringe 19 is connected to the reagent probes 7a, 8a. Each of the reagent probes 7a, 8a moves while drawing an arc around a rotation axis, accesses an inside of the reagent disk 9 from the aspiration port, and dispenses the reagent from the reagent bottles 10 into the reaction containers 2.

A cleaning tank 32 for cleaning the reagent probe 7a with cleaning water is disposed in an operation range of the reagent dispensing mechanism 7, and a cleaning tank 33 for cleaning the reagent probe 8a with cleaning water is disposed in an operation range of the reagent dispensing mechanism 8.

Around the reaction disk 1, the stirring mechanisms 5, 6 , each of which stirs a mixed solution (reaction solution) of the specimen and the reagent dispensed into the reaction container 2, the spectrophotometer 4 that measures absorbance of the reaction solution by measuring transmitted light obtained by light from the light source 4a passing through the reaction solution in the reaction container 2, the cleaning mechanism 3 that cleans the used reaction container 2, and the like are disposed.

Each of the stirring mechanisms **5,** 6 is configured to rotate in a horizontal direction and move up and down, and is inserted into the reaction container 2 to stir the mixed solution (reaction solution) of the specimen and the reagent. The cleaning tanks 30, 31 for cleaning the stirring mechanisms **5,** 6 with cleaning water are disposed in operation ranges of the stirring mechanisms **5, 6,** respectively. A cleaning pump is connected to the cleaning mechanism **3.**

The controller 24 is connected to the devices in the automatic analyzer 100 described above, and controls an operation of each device and mechanism in the automatic analyzer 100. The controller 24 is a computer including a CPU, a memory, and the like, and performs arithmetic processing for obtaining a concentration of a predetermined component in the specimen based on a detection result of the spectrophotometer 4.

The control on the operation of each device is executed by the controller 24 based on various programs recorded in a storage device. The storage device stores, in addition to various programs used to measure the specimen, various parameters received via an input device, information of a measurement target specimen (specimen type information and the like), a measurement result, and the like.

Operation control processing executed by the controller 24 may be integrated into one program, may be divided into a plurality of programs, or may be a combination thereof. A part or all of the programs may be implemented by dedicated hardware or may be modularized.

A display unit 24a is a display device such as a liquid crystal display that displays, to an operator, various types of information in the automatic analyzer 100 such as input screens for various parameters and settings, analysis test data of an initial test or re-test, measurement results, and reagent information. Note that, a touch panel type of display device that also serves as an input unit can be used.

The water supply unit 102 has a function of supplying water supplied from a pure water equipment 50 to the analysis unit 101, and includes a water supply electromagnetic valve 51, a water level sensor 52, a water supply tank 53, a water supply pump 54, a water supply tank presence sensor 55, and the like.

The pure water equipment 50 is an equipment that supplies water from the outside of the automatic analyzer 100 to the water supply tank 53 inside the automatic analyzer 100, and is basically an equipment in a facility such as a hospital or a test center in which the automatic analyzer 100 is installed.

The water supply tank 53 is a tank that temporarily stores water supplied from the pure water equipment 50 outside the analyzer and to be consumed by each mechanism of the automatic analyzer 100, and includes, at a position adjacent to the water supply tank 53, the water level sensor 52 that detects a water level of the water stored in the water supply tank 53 in order to prevent overflow or depletion of the water stored in the water supply tank 53.

When the water is not always supplied to the water supply tank 53, and the water supply tank presence sensor 55 detects that the water supply tank 53 is installed in the water supply unit 102, the water supply electromagnetic valve 51 is provided in a pipe from the water supply facility 50 to the water supply tank 53, in order to supply the water to the water supply tank 53 when necessary. Opening and closing of the water supply electromagnetic valve 51 is performed to be controlled by a command signal from the controller 24 based on water level information from the water level sensor 52.

The water supply pump 54 supplies the water from the water supply tank 53 to each mechanism of the analysis unit 101 through a supply flow path. At this time, the controller 24 opens any one or more of electromagnetic valves 3a, 18a, 19a, 30a, 31a, 32a, 33a, 40a, and 42a provided in front of a portion where the water is to be consumed, and supplies the water. On the other hand, when the water is not to be consumed in the analysis unit 101, the water is circulated from a circulation flow path to the water supply tank 53.

The water supply tank presence sensor 55 is provided at a position adjacent to the water supply tank 53, is implemented by an optical sensor that detects whether the water supply tank 53 is installed in the water supply unit 102, and prevents malfunction of the automatic analyzer 100 in a state where the water supply tank 53 is not installed or in a state where something other than the water supply tank 53 is installed.

The above is the configuration of the automatic analyzer 100.

The configuration of the automatic analyzer 100 is not limited to a case of a biochemical analyzer that executes analysis of biochemical analysis items as shown in FIG. 1, and may be an analyzer that executes analysis of other analysis items, such as an immune analyzer that executes analysis of immune analysis items. Further, the biochemical analyzer is not limited to the form shown in FIG. **1****,** and other analysis items, for example, an analysis device for measuring an electrolyte can be separately mounted.

Further, the automatic analyzer 100 is not limited to the form of a single analysis module configuration as shown in FIG. 1, and may be configured such that two or more analysis modules capable of measuring various same or different analysis items or preprocessing modules for performing preprocessing are connected by a transport device.

Specimen test analysis processing executed by the automatic analyzer 100 as described above is generally executed in the following order.

First, the specimen in the specimen container 15 placed on the specimen rack 16 transported near the reaction disk 1 by the specimen transport mechanism 17 is dispensed into the reaction container 2 on the reaction disk 1 by the specimen probes 11a, 12a of the specimen dispensing mechanisms 11, 12. Next, the reagent to be used for analysis is dispensed by the reagent dispensing mechanisms 7, 8 from the reagent bottle 10 on the reagent disk 9 into the reaction container 2 into which the specimen is previously dispensed. Subsequently, the stirring mechanisms 5, 6 stir the mixed solution of the specimen and the reagent in the reaction container **2.**

Thereafter, the light generated from the light source 4a is transmitted through the reaction container 2 containing the mixed solution after stirring, and an intensity of the transmitted light is measured by the spectrophotometer 4. The intensity measured by the spectrophotometer 4 is transmitted to the controller 24 via an A/D converter and an interface. Then, a concentration of a predetermined component in the liquid specimen such as the blood or urine is obtained by calculation performed by the controller 24, and a result is displayed on the display unit 24a or the like and stored in a storage unit (not shown).

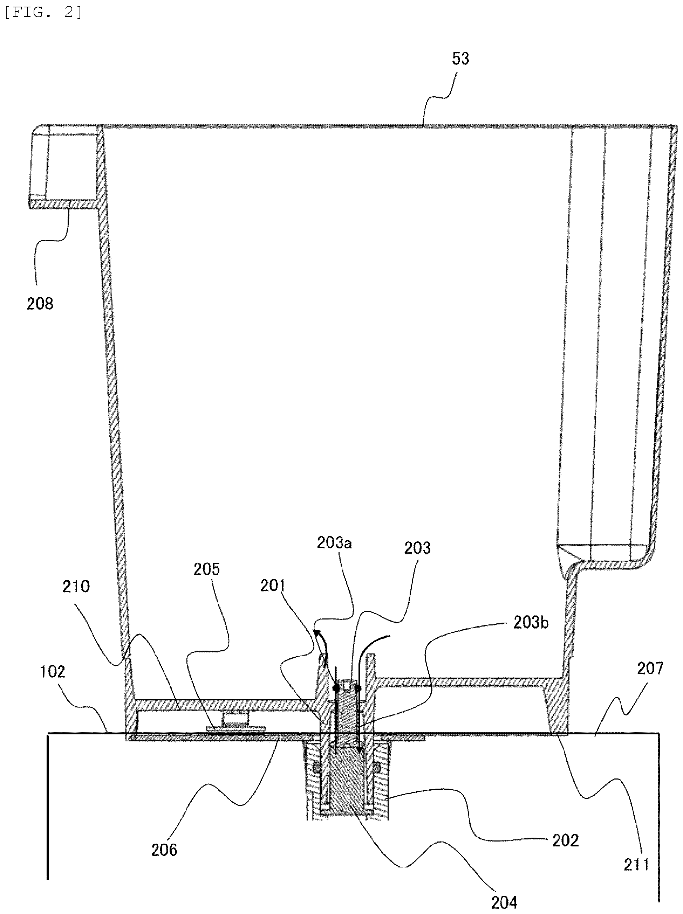

Next, a characteristic configuration of the water supply tank 53 and a periphery thereof according to the invention will be described with reference to FIG. 2 and subsequent drawings. FIG. 2 is a cross-sectional view of a connection portion between the water supply tank 53 and the water supply unit 102.

As shown in FIG. 2, the water supply tank 53 has, on a bottom surface 210 thereof, a water-passing pipe 201 for supplying water to the analysis unit 101, and the water-passing pipe 201 is connected to a water-passing nipple 202 provided on an installation surface 207 on a housing side of the automatic analyzer 100.

The water-passing pipe 201 of the water supply tank 53 is provided with a water supply tank valve mechanism 203. The water supply tank valve mechanism 203 is provided with a sealing material 203a and an elastic body 203b to prevent a water leakage in the water supply tank 53.

When the water supply tank valve mechanism 203 is connected to the water-passing nipple 202 provided on the installation surface 207 on the housing side of the automatic analyzer 100, the elastic body 203b is deformed by being pushed up by a push lot 204, and water can pass by opening the valve, and when the water supply tank valve mechanism 203 is separated from the water-passing nipple 202, the elastic body 203b is deformed, and the valve is closed and water cannot pass. In this manner, water passing through the water-passing pipe 201 is controlled by opening and closing the water supply tank valve mechanism 203 by the deformation of the elastic body 203b.

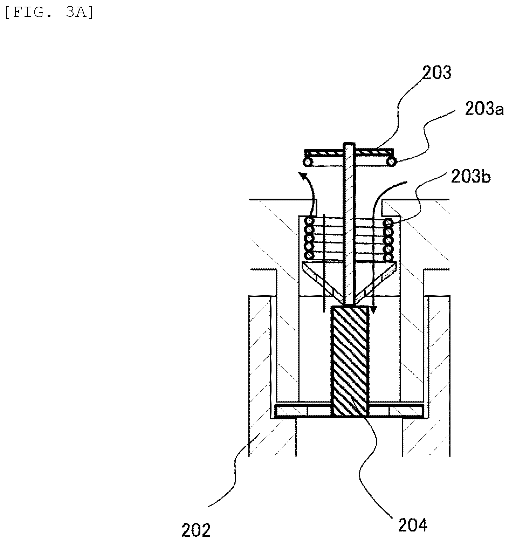

The water-passing nipple 202 is provided with a water leakage preventing member such as an O-ring, a packing, and a sealing material, and arrows in the drawing indicate water-passage directions at the time of supply and discharge when the water supply tank is connected. A method of controlling water passing through the water supply tank valve mechanism 203 will be described with reference to FIG. 3A and subsequent drawings.

Similarly, an adsorption force acts between a magnet 205 provided on the bottom surface 210 of the water supply tank 53 and a metal plate 206 provided on an installation surface 207 side of the water supply unit 102 opposite to the bottom surface 210 on which the magnet 205 is provided.

In a case of a related-art structure in which there is no adsorption force generated between the magnet 205 and the metal plate 206, there is a concern that the tank gradually uplifts due to a reaction force of the elastic body 203b provided in the water supply tank valve mechanism 203 even when the tank is pushed and mounted until the tank comes into contact with the water supply unit 102.

However, due to the magnet 205 and the metal plate 206 which are described above, when the reaction force of the elastic body 203b provided in the water supply tank valve mechanism 203 is exceeded, the water supply tank 53 is strongly fixed to the installation surface 207 of the water supply unit 102 as compared with the related-art structure instead of being uplifted, and a contact state can be maintained.

The metal plate 206 is fixed to the installation surface 207, and fixes the water-passing nipple 202 in contact with the water-passing pipe 201.

The metal plate 206 is not limited to metal, and can be substituted by a magnetic member that generates an adsorption force between the magnet 205 and the metal plate 206, the magnetic member is preferably a ferromagnetic member that generates a particularly strong adsorption force. For example, a resin plate to which another magnet is attached may be used instead of the metal plate. In this case, the resin plate needs to have a thickness enough so that an adsorption force acts between the magnets. Further, the metal plate or the magnetic member does not need to have a plate shape, and may have another shape.

A handle 208 is provided on the water supply tank 53, and is used when the water supply tank 53 is attached to and detached from the installation surface 207 of the water supply unit 102.

A tank installation surface 211 is a surface of the water supply tank 53 that comes into contact with the installation surface 207 of the water supply unit 102.

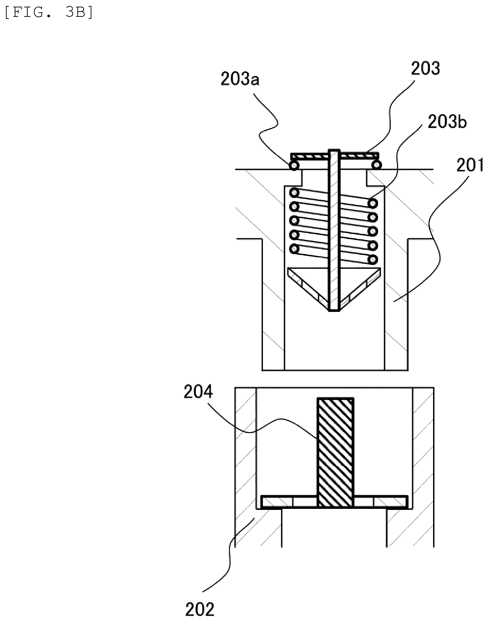

FIGS. 3A and 3B are schematic diagrams of the water supply tank valve mechanism 203 in the present embodiment. FIG. 3A shows a state in which the water supply tank valve mechanism 203 and the water-passing nipple 202 are connected. FIG. 3B shows a state in which the water supply tank valve mechanism 203 and the water-passing nipple 202 are not connected.

As shown in FIGS. 3A and 3B, the water-passing pipe 201 provided in the water supply tank 53 includes the water supply tank valve mechanism 203, the sealing material 203a, and the elastic body 203b, and the water-passing nipple 202 includes the push lot 204.

As shown in FIG. 3A, when the water supply tank valve mechanism 203 is pushed up by the push lot 204, the elastic body 203b is deformed, the sealing material 203a is separated from the bottom surface 210 in the water supply tank 53, and thereby the valve is opened and water can pass therethrough. Arrows in the drawing indicate water flow directions during supply and discharge.

As shown in FIG. 3B, when the water supply tank 53 is removed, the water-passing pipe 201 and the water-passing nipple 202 are separated from each other, the elastic body 203b of the water supply tank valve mechanism 203 returns to an original state, and the sealing material 203a comes into close contact with the bottom surface 210 in the water supply tank 53, so that the water leakage from the water supply tank 53 can be prevented.

It is desirable that the sealing material 203a provided in the water supply tank valve mechanism 203 is a material that can be deformed according to a hole shape of the water-passing pipe 201, such as rubber. In addition, it is desirable that the elastic body 203b is deformed when a force of, for example, a spring, is applied, and returns to the original state when the load is removed.

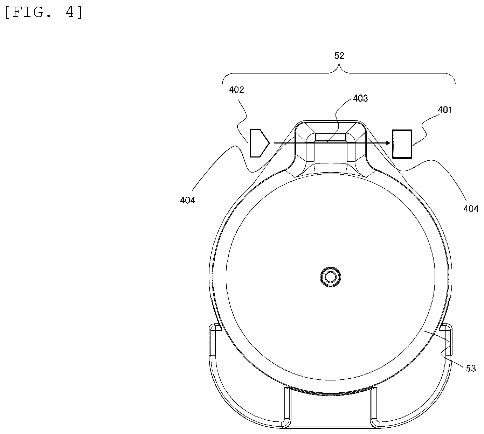

FIG. 4 is a top view of the water supply tank 53 according to the present embodiment. As shown in FIG. 4, the water supply tank 53 is disposed such that an optical axis 403 of the water level sensor 52 blocks a plane shape 404 portion on a projection side of the water supply tank 53. The water level sensor 52 is provided inside the water supply unit 102, is disposed at a position where the optical axis passes through the plane shape 404, receives light emitted from a light source 402 by a light receiving unit 401, and outputs a voltage according to an amount of the received light.

When the water level is lower than the optical axis, only the water supply tank 53 exists on the optical axis 403. At this time, since the water supply tank 53 is made of a material that transmits a wavelength of the light of the light source 402 and has the plane shape 404 on a water supply tank surface on the optical axis 403, the light receiving unit 401 receives the light of the light source 402. Accordingly, the light receiving unit 401 outputs a voltage.

On the other hand, when the water level is higher than the optical axis 403, water exists on the optical axis 403 in addition to the water supply tank 53. Since water absorbs the wavelength of the light of the light source 402, the light receiving unit 401 cannot receive the light of the light source 402. As a result, an output voltage of the light receiving unit 401 becomes substantially 0. By comparing a magnitude relationship between the output voltage of the light receiving unit 401 and a predetermined threshold, it is possible to determine whether the water level is higher or lower than the optical axis.

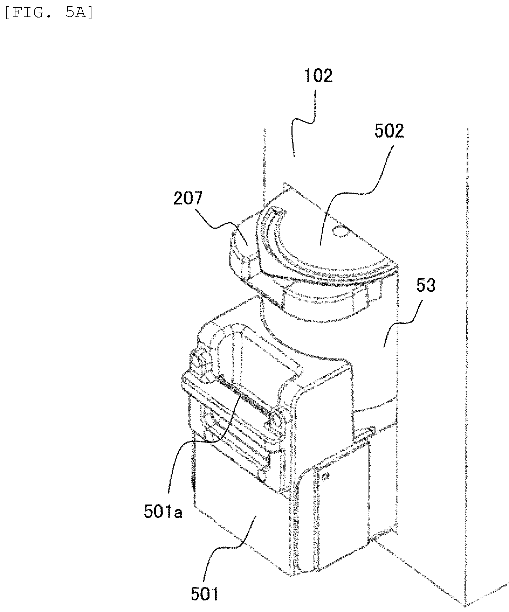

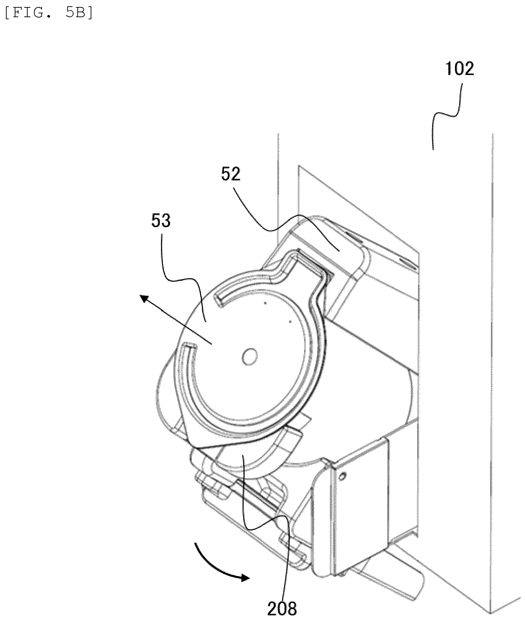

FIGS. 5A and 5B are perspective views of the water supply unit 102 in a state where the water supply tank 53 is installed in the present embodiment. FIG. 5A shows a state in which the water supply tank 53 is installed and stored in the water supply unit 102. FIG. 5B shows a state when the water supply tank 53 is attached and detached.

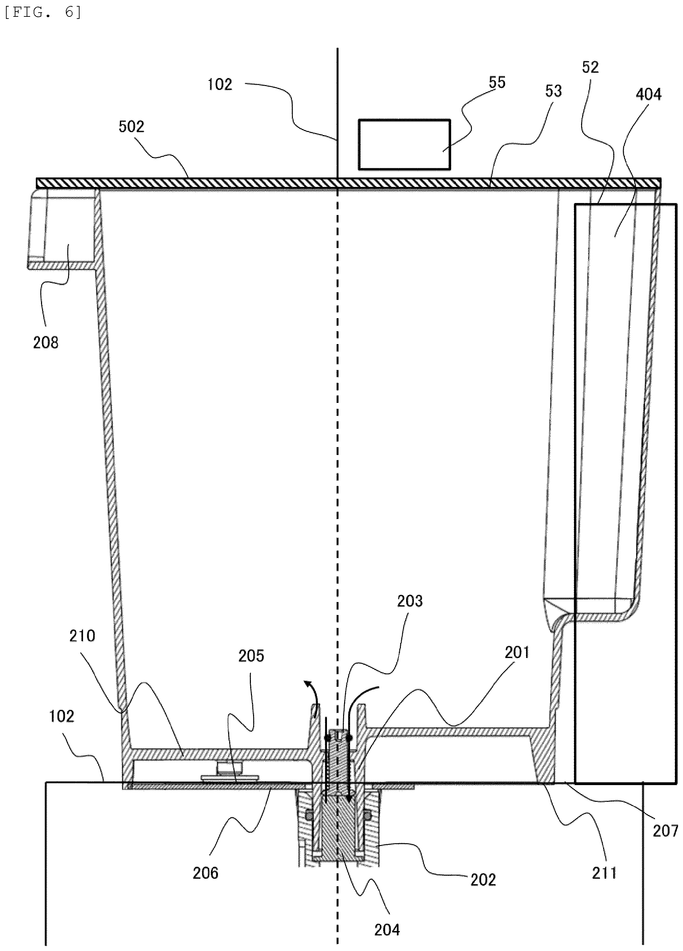

As shown in FIG. 5A, a tilt mechanism 501 is provided in the water supply unit 102, the water supply tank 53 is installed in the tilt mechanism 501, and approximately half of the water supply tank 53 can be stored in the water supply unit 102. A positional relationship among the water supply tank 53, the water level sensor 52, and the water supply tank presence sensor 55 in a state of being stored in the water supply unit 102 will be described later with reference to FIG. 6.

Further, the water supply tank presence sensor 55 provided in the analyzer detects that the water supply tank 53 is installed when the water supply tank 53 is stored, and the automatic analyzer 100 can operate. At this time, when the water supply tank 53 is not installed, or when a distance between the water supply tank 53 and the water supply tank presence sensor 55 is significantly short, the automatic analyzer 100 cannot operate in a situation where the water supply tank presence sensor 55 is outside a detection range of the water supply tank 53.

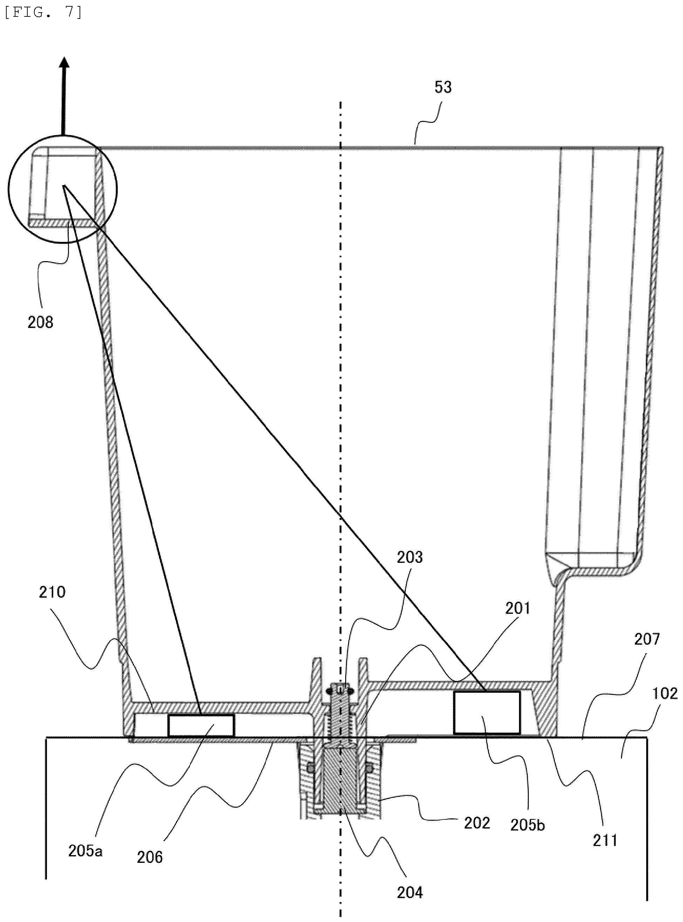

As shown in FIG. 5B, in the state of FIG. 5A, a lever 501a provided in the tilt mechanism 501 is pulled forward, a lock of the tilt mechanism 501 is released, and the tilt mechanism 501 is tilted downward. Thereafter, the water supply tank 53 is pulled out in a direction perpendicular to the installation surface 207. When the water supply tank 53 is pulled out, since the magnet 205 is provided on a handle 208 side of the bottom surface 210 of the water supply tank 53, the water supply tank 53 is easily pulled out with a small force. A principle of the pulling out will be described with reference to FIG. 7.

On the other hand, when the water supply tank 53 is attached, the water supply tank 53 is inserted and attached in a direction perpendicular to the installation surface 207 in a state where the tilt mechanism 501 is tilted in advance. When attaching the water supply tank 53, there is an effect that an operator feels a tactile feedback of the adsorption force of the magnet and the magnetic member provided on the bottom surface 210 and the installation surface of the water supply tank 53, and can recognize that the water supply tank 53 is correctly attached.

FIG. 6 is a cross-sectional view of the water supply tank 53 in the state in FIG. 5A. The water supply tank presence sensor 55 provided in the water supply unit 102 determines the presence or absence of the water supply tank 53 by detecting whether a lid 502 is within a predetermined distance in a state where the water supply tank 53 is stored. As described above, when the water supply tank 53 is not installed at this time or at the time of tilting, the distance between the water supply tank presence sensor 55 and the water supply tank 53 changes, it is regarded that the water supply tank 53 is not installed, an operation of the automatic analyzer 100 is stopped, and an alarm is generated.

FIG. 7 is a cross-sectional view showing a positional relationship between the magnet 205 and the handle 208. As shown in FIG. 7, in the present embodiment, the magnet 205 is provided at a position of a position 205a in FIG. **6****.** When the water supply tank 53 is viewed from the bottom surface 210, the position 205a is provided closer to the handle 208 than to the center of the water supply tank 53 of the water supply tank 53, and a relative distance between the handle 208 and the magnet 205 is shorter than in a case where the magnet is provided at a position 205b, so that moment of the force is reduced and the water supply tank 53 can be pulled out with a smaller force.

If a magnet is provided at the position 205b, the moment of force for pulling out increases as the distance to the handle 208 increases, a required force increases as compared with the case where the magnet 205 is provided at the position 205a.

From the above, when the water supply tank 53 is viewed from above in a vertical direction, the magnet 205 is provided on the handle side on the bottom surface 210 with respect to the center axis of the water supply tank 53, and thus it is possible to pull out the water supply tank 53 with a small force. The handle 208 is provided on a side surface of the water supply tank 53 as shown in the figure, and has a structure in which the operator can perform the pulling out by hooking fingers of the hand from below.

However, the invention is not limited to this form as long as the operator can hold the handle 208 with one hand. For example, the handle 208 may be provided on an upper surface of the water supply tank 53. However, it is conceivable to change the structure of the lid 502 and provide the handle 208 at a location other than the lid 502.

Next, effects of the present embodiment will be described.

The automatic analyzer 100 of Embodiment 1 of the invention described above includes the analysis unit 101; the water supply tank 53 including, on the bottom surface 210 thereof, the water-passing pipe 201 configured to supply water to the analysis unit 101; the installation surface 207 on which the water supply tank 53 is installed; the magnet 205 provided on either one of the bottom surface 210 and the installation surface 207; and the metal plate 206 provided on the side opposite to the side on which the magnet 205 is provided between the bottom surface 210 and the installation surface 207, and the water supply tank 53 is fixed to the installation surface 207 by the magnetic force of the magnet 205 and the metal plate 206.

As described above, by stabilizing the connection of the water supply tank 53 using the magnet 205 to prevent the water supply tank 53 from uplifting, it is possible to avoid risks caused by uplifting such as water leakage, mixing of air, and erroneous detection of various sensors, and it is possible to provide a highly reliable analyzer. In addition, a customer can easily attach and detach the water supply tank 53 by a simple operation of pulling out and inserting the water supply tank 53, and can easily recognize whether the attachment of the water supply tank 53 is successful by a tactile feedback of the adsorption force of the magnet 205 without feeling a sense of resistance caused by a water leakage prevention mechanism such as the spring of the water supply tank valve mechanism 203 and the O-ring of the nipple when the water supply tank 53 is attached.

In addition, since the water supply tank 53 includes the water supply tank valve mechanism 203 that controls the water flow to the water-passing pipe 201, it is possible to reliably prevent the water leakage with a simple structure.

Further, the water supply tank valve mechanism 203 has the elastic body 203b, and the water flow to the water-passing pipe 201 is controlled by opening and closing the water supply tank valve mechanism 203 by deformation of the elastic body 203b, so that the water leakage can be reliably prevented with a simple structure.

In addition, since the water supply tank 53 has the handle 208 for removing the water supply tank 53 from the installation surface 207, removal and attachment work at the time of maintenance or the like of the water supply tank 53 becomes easy.

Further, since the magnet 205 and the metal plate 206 are provided closer to the handle 208 than to the center axis of the water supply tank 53 when the water supply tank 53 is viewed from the bottom surface 210, the force at the time of removal can be reduced, and the work becomes easier.

In addition, since the magnetic material is metal, in particular, the metal is fixed to the installation surface 207, the water-passing nipple 202 in contact with the water-passing pipe 201 is restricted, and thus a metal plate for fixing a water leakage prevention mechanism such as the water-passing nipple 202 provided in the related art can be used, so that addition of a new mechanism can be minimized.

Further, since the water level sensor 52 for detecting the water level in the water supply tank 53 is provided at a position adjacent to the water supply tank 53, it is not necessary to insert the water level sensor into the water supply tank 53, and deterioration of water quality can be prevented as much as possible.

In addition, since the water supply tank presence sensor 55 that detects the presence or absence of installation of the water supply tank 53 is provided at a position adjacent to the water supply tank 53, it is possible to prevent the automatic analyzer 100 from operating in a state where the water supply tank 53 is not installed.

### <Embodiment 2>

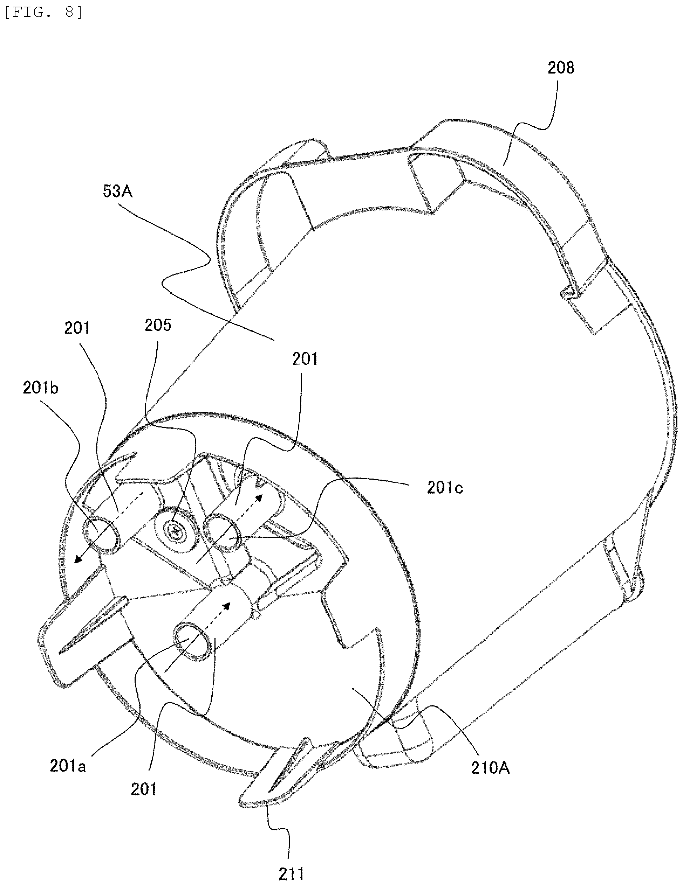

An automatic analyzer according to Embodiment 2 of the invention will be described with reference to FIG. **8.** FIG. 8 is a perspective view of a bottom surface portion of a water supply tank in the automatic analyzer according to Embodiment 2.

As shown in FIG. 8, only one water-passing pipe 201 is provided on the bottom surface 210 of the water supply tank 53 in Embodiment 1, but two or more water-passing pipes 201, more specifically, three water-passing pipes 201 are provided on a bottom surface 210A of a water supply tank 53A in Embodiment 2.

As shown in FIG. 8, three water-passing pipes 201 are provided on the bottom surface 210A of the water supply tank 53A, a water-refilling port 201a from the pure water equipment 50 is provided at a center of the bottom surface 210A of the water supply tank 53A, and a supply port 201b to the water supply pump 54 and a return water inflow port 201c from the water supply pump 54 are provided on the bottom surface 210A of the water supply tank 53A closer to the handle 208 than to the center axis of the water supply tank 53 when the water supply tank 53 is viewed from the bottom surface 210.

Since connection directions of the pipes are aligned by providing the water-refilling port 201a, the supply port 201b, and the return water inflow port 201c in the bottom surface 210A ,respectively, the water-passing pipes 201 on the bottom surface 210 in the water supply tank 53 can be attached to and detached in the same manner as in the case where one water-passing pipe 201 is provided.

Further, by providing the magnet 205 within a range surrounded by the three water-passing pipes 201, it is possible to prevent uplift of the water-passing pipes 201 by the adsorption force of one magnet 205 against reaction forces generated by the elastic bodies of the water supply tank valve mechanisms 203 provided in the three water-passing pipes 201.

The magnet 205, the metal plate 206, and the water-passing pipes 201 are provided closer to the handle 208 than to the center axis of the water supply tank 53A when the water supply tank 53A is viewed from the bottom surface 210A.

Other configurations and operations are substantially the same as those in the automatic analyzer according to Embodiment 1 described above, and details thereof are omitted.

As in the automatic analyzer of Embodiment 2 of the invention, in a form in which the bottom surface 210A has two or more water-passing pipes 201, substantially the same effects as those of the automatic analyzer of Embodiment 1 described above can also be obtained.

In addition, by providing the magnet 205 or the metal plate 206 between the two or more water-passing pipes 201, it is possible to most effectively prevent the uplift with a simple structure in which the water supply tank 53A is easily attached to and detached from the analyzer when a plurality of water-passing pipes 201 are provided.

Further, since the magnet 205, the metal plate 206, and the water-passing pipes 201 are provided closer to the handle 208 than to the center axis of the water supply tank 53A when the water supply tank 53A is viewed from the bottom surface 210A, it is possible to obtain an effect that a force required for attaching and detaching the water supply tank 53A is reduced.

The number of the water-passing pipes 201 in Embodiment 2 is not limited to three, and the effect is also obtained in a case where two water-passing pipes 201 are provided or a case where four or more water-passing pipes 201 are provided. In this case, the same effect can be obtained by changing a size of the magnet 205 and the adsorption force.

### <Embodiment 3>

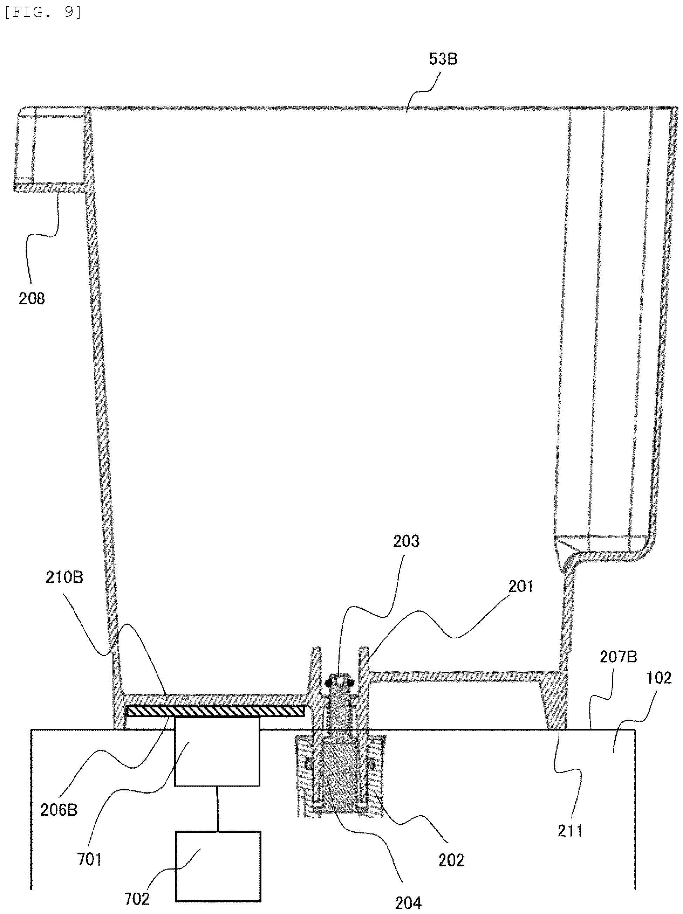

An automatic analyzer according to Embodiment 3 of the invention will be described with reference to FIG. 9. FIG. 9 is a cross-sectional view of a connection portion between a water supply tank and a water supply unit in the automatic analyzer according to Embodiment 3.

In Embodiment 1 and Embodiment 2, the magnet 205 provided in the water supply tank 53 and the metal plate provided in the water supply unit 102 are used in order to prevent the uplift when the water supply tank 53 and the water supply unit 102 are connected, but a water supply tank 53B of Embodiment 3 is different from that in Embodiment 1 in that an electromagnet 701 is provided instead of the magnet 205.

As shown in FIG. 9, in the automatic analyzer of Embodiment 3, a metal plate 206B is provided on a bottom surface 210B side of the water supply tank 53B, and the electromagnet 701 is provided on an installation surface 207B of the water supply unit 102. This embodiment is the same as Embodiment 1 in that the bottom surface 210B of the water supply tank 53B and the water supply unit 102 are connected by the adsorption force of the magnet 205 to prevent the uplift.

In addition to the electromagnet 701, an electromagnet control circuit 702 that controls ON and OFF of energization of the electromagnet 701 is provided.

Other configurations and operations are substantially the same as those in the automatic analyzer according to Embodiment 1 described above, and details thereof are omitted.

In the automatic analyzer according to Embodiment 3 of the invention, substantially the same effects as those of the automatic analyzer according to Embodiment 1 described above can also be obtained.

In Embodiment 1, the magnet 205 and the metal plate 206 are always attracted to each other by the adsorption force of the magnet regardless of whether the analyzer is energized, and the water supply tank 53B needs to be pulled out with a force equal to or larger than the adsorption force when detaching the water supply tank 53B.

On the other hand, in the present embodiment, the generation of the adsorption force can be freely switched by controlling the energization of the electromagnet 701 by the electromagnet control circuit 702. Accordingly, there is an advantage that the adsorption force is eliminated by eliminating the energization to the electromagnet 701 only when pulling out the water supply tank 53B from the water supply unit 102, and the water supply tank 53B can be pulled out from the water supply unit 102 with a smaller force.

Therefore, the adsorption force can be maintained regardless of the number and arrangement of the water-passing pipes 201 provided in the water supply tank 53B, and even when the shapes of the water supply tank 53B and the water supply unit 102 are changed, it is not necessary to consider the positional relationship among the pipes, the magnets, and the handles, which is preferable.

### <Others>

The invention is not limited to the above-described embodiments, and includes various modifications. The above embodiments have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. It is possible to add, delete, or replace a part of configurations of each embodiment with other configurations.

For example, in Embodiment 1 and Embodiment 2 described above, a form has been described in which the magnet 205 is provided on the bottom surface 210 of the water supply tank 53 and the metal plate 206 is provided on the installation surface 207, but a form in which the magnet 205 is provided on the installation surface 207 and the metal plate 206 is provided on the bottom surface 210 may be adopted.

In addition, although the form has been described in which the water-passing pipe 201 for supplying water to the analysis unit 101 is provided on the bottom surface 210 of the water supply tank 53, a form in which the water-passing pipe 201 is provided on a side surface of the water supply tank 53 may be adopted.

In such a case, an automatic analyzer includes: an analysis unit; a water supply tank including, on a side surface thereof, a pipe configured to supply water to the analysis unit; a magnet provided on either one of the side surface and a surface facing the side surface; and a magnetic member provided on a side opposite to the side on which the magnet is provided, of the surface facing the side surface and the side surface. The water supply tank is fixed to the installation surface by a magnetic force of the magnet and the magnetic member.

### Reference Signs List

1 reaction disk
2 reaction container
3 cleaning mechanism
3a, 18a, 19a, 30a, 31a, 32a, 33a, 40a, 42a electromagnetic valve
4 spectrophotometer
4a light source
5, 6 stirring mechanism
7, 8 reagent dispensing mechanism
7a, 8a reagent probe
9 reagent disk
10 reagent bottle
11, 12 specimen dispensing mechanism
11a, 12a specimen probe
13, 14 cleaning tank
15 specimen container
16 specimen rack
17 specimen transport mechanism
18 specimen syringe
19 reagent syringe
24 controller
24a display unit
30, 31, 32, 33 cleaning tank
40, 42 circulation pump
41 gear pump
50 water supply facility
51 water supply electromagnetic valve
52 water level sensor
53, 53A, 53B water supply tank
54 water supply pump
55 water supply tank presence sensor
100 automatic analyzer
101 analysis unit
102 water supply unit
201 water-passing pipe
201a water-refilling port
201b supply port
201c return water inflow port
202 water-passing nipple (member)
203 water supply tank valve mechanism
203a sealing material
203b elastic body
204 push lot
205 magnet
205a, 205b position
206, 206B metal plate (magnetic member)
207, 207B installation surface
208 handle
210, 210A, 210B bottom surface
211 tank installation surface
401 light receiving unit
402 light source
403 optical axis
404 plane shape
501 tilt mechanism
501a lever
502 lid
701 electromagnet
702 electromagnet control circuit

## Claims

1. An automatic analyzer, comprising:
an analysis unit;
a water supply tank including, on a bottom surface thereof, a pipe configured to supply water to the analysis unit;
an installation surface on which the water supply tank is installed;
a magnet provided on either one of the bottom surface and the installation surface; and
a magnetic member provided on the other of the bottom surface and the installation surface, wherein
the water supply tank is fixed to the installation surface by a magnetic force of the magnet and the magnetic member.

2. The automatic analyzer according to claim 1, wherein
the water supply tank includes a valve mechanism configured to control water passing through the pipe.

3. The automatic analyzer according to claim 2, wherein
the valve mechanism includes an elastic body, and the water passing through the pipe is controlled by deforming the elastic body to open and close the valve mechanism.

4. The automatic analyzer according to claim 1, wherein
two or more of the pipes are provided on the bottom surface.

5. The automatic analyzer according to claim 4, wherein
the magnet or the magnetic member is provided among the two or more pipes.

6. The automatic analyzer according to claim 1, wherein
the water supply tank includes a handle for removing the water supply tank from the installation surface.

7. The automatic analyzer according to claim 6, wherein
the magnet and the magnetic member are provided on a handle side relative to a center axis of the water supply tank when the water supply tank is viewed from the bottom surface.

8. The automatic analyzer according to claim 6, wherein
the magnet, the magnetic member, and the pipe are provided on a handle side relative to a center axis of the water supply tank when the water supply tank is viewed from the bottom surface.

9. The automatic analyzer according to claim 1, wherein
the magnetic member is metal.

10. The automatic analyzer according to claim 9, wherein
the metal is fixed to the installation surface, and prevents a member to come into contact with the pipe.

11. The automatic analyzer according to claim 1, wherein
the magnet is an electromagnet provided on the installation surface, and
the magnetic member is provided on the bottom surface.

12. The automatic analyzer according to claim 11, further comprising:
a control circuit capable of switching ON and OFF of energization to the electromagnet.

13. The automatic analyzer according to claim 1, further comprising:
a sensor, configured to detect a water level of the water in the water supply tank, at a position adjacent to the water supply tank.

14. The automatic analyzer according to claim 1, further comprising:
a sensor, configured to detect presence or absence of installation of the water supply tank, at a position adjacent to the water supply tank.
